# EUROPÄISCHE PATENTSCHRIFT

(11) **EP 0 991 890 B1**
(45) Veröffentlichungstag und Bekanntmachung des Hinweises auf die Patenterteilung: **20.03.2002**
(21) Anmeldenummer: 98958247.3
(22) Anmeldetag: 21.11.1998
(51) Int. Cl.: F16L 37/084

(54) **LÖSBARE STECKVERBINDUNG FÜR HOCHDRUCKLEITUNGEN**
RELEASABLE PLUG-IN CONNECTOR FOR HIGH PRESSURE LINES
RACCORD RAPIDE AMOVIBLE POUR CANALISATIONS A HAUTE PRESSION

(30) Priorität: 16.12.1997 DE 19755826
(43) Veröffentlichungstag der Anmeldung: 12.04.2000
(73) Patentinhaber: A. Raymond & Cie, 38028 Grenoble (FR)
(72) Erfinder: MORETTI, Erminio, F-38000 Grenoble (FR); MARTIN-COCHER, Daniel, F-38000 Grenoble (FR)
(74) Vertreter: Kirchgaesser, Johannes, Dipl.-Ing.
(86) Internationale Anmeldenummer: EP9807508
(87) Internationale Veröffentlichungsnummer: WO9931427

(56) Entgegenhaltungen:
- EP-A- 0 451 739
- EP-A- 0 663 558
- DE-A- 3 924 173

## Beschreibung

Die Erfindung bezieht sich auf eine lösbare Steckverbindung für Hochdruckleitungen und insbesondere für Bremsleitungen im Kraftfahrzeugbau gemäß dem Oberbegriff des Patentanspruchs.

Derartige Steckverbindungen sind beispielsweise bekannt aus **EP 0 532 242 A2.** Um dem hohen Druck der Bremsflüssigkeit zu widerstehen, ist neben dem obligatorischen Dichtring noch eine starke Haltefeder aus Federblech erforderlich. Beim genannten Stand der Technik sind die Federlappen mit ihren konisch zusammenlaufenden Enden an einer ringförmigen Scheibe angeformt und stützen sich mit dieser Scheibe an der Stirnseite des rohrförmigen Einsteckteils ab. Um das Einsteckteil mit der Haltefeder auf dem Ende der Rohrleitung unverschiebbar zu befestigen, wird die Rohrwand beiderseits des Einsteckteils verformend aufgeweitet, und zwar derart, daß der in Einsteckrichtung an der hinteren Stirnwand anliegende Ring der Haltefeder mit erfaßt wird. Das Bestücken des Rohrendes mit dem Einsteckteil und der Haltefeder erfordert somit einen erheblichen Montageaufwand.

Um diesen Aufwand zu verringern und die damit verbundenen Ausrüstungskosten zur Vorbereitung des Rohrendes auf dem Einsteckvorgang zu senken, ist die vorliegende Steckverbindung erfindungsgemäß so ausgebildet, daß das Einsteckteil an der Einführseite einen ringförmigen Halteflansch aufweist und mit einer kreisringförmigen Aussparung versehen ist, in welche das Rohrende durch verformende Aufweitung der Rohrwand eindrückbar ist, und daß die Haltefeder mit einem zentralen Schellenbügel versehen ist, welcher auf dem rohrförmigen Anschlußstück des Einsteckteils unmittelbar neben dem Halteflansch aufsteckbar ist.

Hierdurch wird die Montage deutlich vereinfacht, indem zunächst das Einsteckteil mit nur einer Aufweitung auf dem Rohrende befestigt und dann die Haltefeder mit dem Rohrbügel auf dem rohrförmigen Bereich des Einsteckteils aufgeclipst und am Halteflansch abgestützt wird.

Durch die gemäß Anspruch 2 vorgesehenen Rundbögen an den beiden Enden der Federlappen und die gemäß Anspruch 3 angeformten, seitlichen Stützlappen wird zudem bei der vorliegenden Steckverbindung eine erhebliche Verstärkung der Haltekraft bewirkt, wobei die überstehenden Stützkanten der Stützlappen sich vorteilhafterweise in den Halteflansch und die Innenwand der Nische etwas eingraben können, bis die Rundbögen zur Anlage kommen.

Ein Ausführungsbeispiel der Erfindung ist in der Zeichnung dargestellt und soll nachfolgend näher erläutert werden :
Es zeigt
- **Fig. 1**: die neue Haltefeder in Seitenansicht mit Teilschnitt gemäß Linie I - I in Figur 2,
- **Fig. 2**: die gleiche Haltefeder in Vorderansicht,
- **Fig. 3**: die gleiche Haltefeder in Draufsicht,
- **Fig. 4**: das rohrförmige Einsteckteil im Längsschnitt gemäß Linie IV - IV in Figur 5,
- **Fig. 5**: das gleiche Einsteckteil als Vorderansicht in Pfeilrichtung A,
- **Fig. 6**: das Ende eines Leitungsrohrs mit aufmontiertem Einsteckteil und Haltefeder,
- **Fig. 7**: das gleiche, vorbereitete Rohrende beim Einführen in das Aufnahmeteil,
- **Fig. 8**: die fertige Steckverbindung nach dem Einrasten der Haltefeder und
- **Fig. 9**: die gleiche Steckverbindung unter der Einwirkung des Hochdrucks.

Die in den Figuren dargestellte Erfindung bezieht sich auf eine lösbare Steckverbindung für Hochdruckleitungen und insbesondere für Bremsleitungen im Kraftfahrzeugbau, bei denen die Steckverbindung besonders große Haltekräfte aufweisen muß.

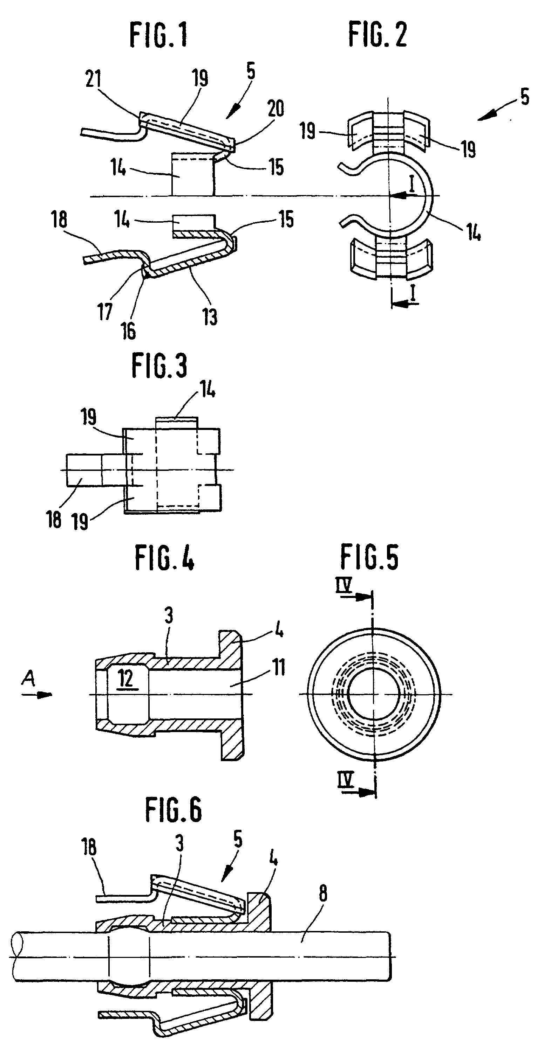

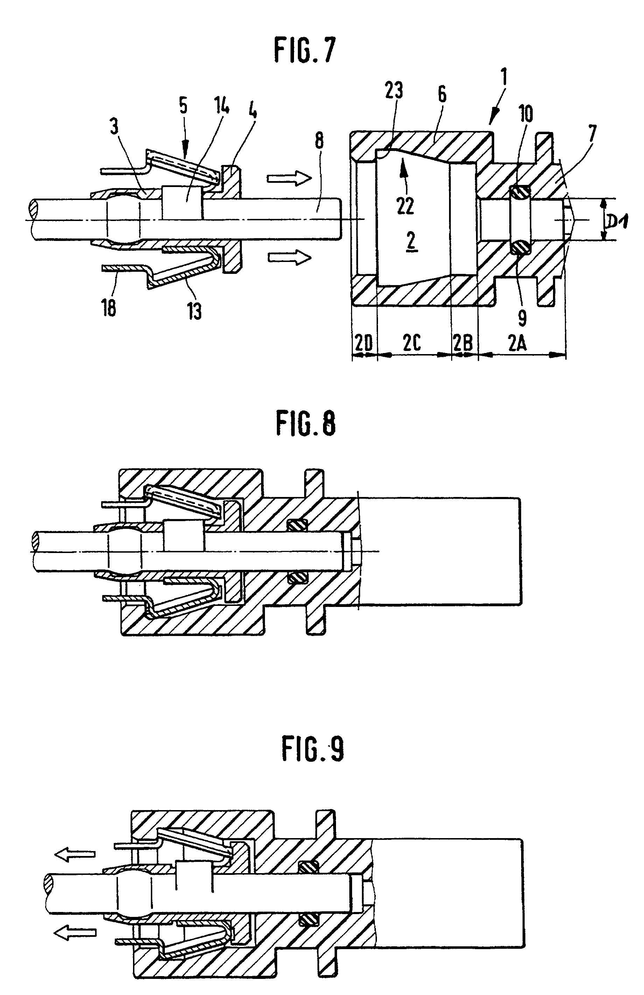

Wie insbesondere aus Figur 6 und 7 ersichtlich, besteht die Steckverbindung aus einem zylindrischen Aufnahmeteil 1 und einem rohrförmigen Einsteckteil 3 mit einem ringförmigen Halteflansch 4 an der Einführseite sowie einer separaten Haltefeder 5 aus Federblech.

Das Aufnahmeteil 1 ist vorzugsweise aus Kunststoff hergestellt und besteht aus einer zylindrischen Gehäusewand 6 mit einem in mehreren Stufen abgesetzten, zentralen Aufnahmeraum 2 sowie aus einem rohrförmigen Anschlußstutzen 7, welcher mit dem Ende einer nicht dargestellten Bremsleitung in bekannter Weise verbindbar ist. Der Aufnahmeraum 2 besitzt in der Tiefe einen Bereich 2a mit einem Durchmesser D1, welcher dem Außendurchmesser des einzuführenden Rohrendes 8 entspricht. Etwa in der Mitte des Bereichs 2a ist eine umlaufende Rille 9 zur Aufnahme eines Dichtungsrings 10 eingelassen.

Das rohrförmige Einsteckteil 3 ist vorzugsweise aus Aluminium oder ähnlich weichem Metall hergestellt und weist, wie aus Figur 4 und 5 ersichtlich, eine zur Aufnahme der Hochdruckleitung 8 entsprechende Bohrung 11 auf. Das Einsteckteil 3 ist auf der vom Halteflansch 4 entfernten Seite mit einer umlaufenden, im Querschnitt trapezförmigen Aussparung 12 versehen, in welche das Rohrende 8 durch verformende Aufweitung der Rohrwand eindrückbar und dadurch axial festlegbar ist ( Figur 6).

Die in Figur 1 bis 3 gezeigte Haltefeder 5 besteht aus zwei konisch zusammenlaufenden Federlappen 13, deren achsnahe Enden mit einem zentralen Schellenbügel 14 versehen ist, welcher auf dem rohrförmigen Einsteckteil 3 unmittelbar neben dem Halteflansch 4 aufsteckbar ist. Die Federlappen 5 sind mit ihren achsnahen Enden an der in Einsteckrichtung vorderen Stirnseite des Schellenbügels 14 in einem Rundbogen 15 angeformt und an den schräg nach außen abstehenden Enden über einen kurzen Bogen 16 mit einem radialen Steg 17 nach innen geführt: Dieser Steg ist im Abstand der achsnahen Enden von der Schellenachse mit einem etwa parallel zur Schellenachse weggerichteten Federsteg 18 versehen, welcher im eingebauten Zustand der Haltefeder 5 aus dem Aufnahmeteil vorsteht.

Die Federlappen 5 weisen an ihren beiden Längsseiten angeformte Stützlappen 19 mit unteren Stützkanten 20 und oberen Stützkanten 21 auf, die die Rundbögen 15 und 16 der Federlappen 5 geringfügig überragen. Diese zusätzlichen Stützlappen 19 sind von den Federlappen 5 aus leicht nach innen gebogen, so daß sie auf einem Kreisbogen konzentrisch zum Schellenbügel 14 liegen.

Die beiderseits der Federlappen 13 angeformten Stützlappen 19 dienen zur Verstärkung der Stützkraft, wobei die die Rundbögen 15 und 16 überragenden Stützkanten 20 und 21 sich unter der Einwirkung des Hochdrucks soweit in den Halteflansch 4 und die Innenwand 23 eingraben, bis die Rundbögen 15 und 16 zur Anlage kommen.

Wie aus Figur 6 ersichtlich, wird das rohrförmige Einsteckteil 3 mit dem Halteflansch 4 in Einsteckrichtung auf das Rohrende 8 der Hochdruckleitung aufgeschoben und dann durch verformende Aufweitung der Rohrwand in die umlaufende Aussparung 12 des Einsteckteils 3 eingedrückt. Sodann wird die Haltefeder 5 mit dem Schellenbügel auf die Außenwand des Einsteckteils 3 aufgeclipst und das Rohrende 8 ist bereit zur Herstellung einer lösbaren Steckverbindung mit dem Aufnahmeteil 1.

Der Aufnahmeraum 2 ist zu diesem Zweck in folgende Bereiche aufgeteilt:
An den bereits erwähnten Bereich 2A zur Aufnahme des Rohrendes 8 schließt sich nach außen hin der erweiterte Bereich 2B zur Aufnahme des Halteflansches 4 an. Dem folgt ein sich konisch erweiternder Bereich 2C, der eine umlaufende Nische 22 zur Aufnahme der Haltefeder 5 bildet. Diese Nische 22 schließt mit einer radial nach innen verlaufenden Abschlußwand 23 ab, an welcher die eingeführte Haltefeder 5 sich entgegen der Eindrückrichtung mit ihren Federlappen 13 und Stützlappen 19 abstützt. Den Anfang des Aufnahmeraums 2 bildet ein Bereich 2D, dessen Durchmesser gleich dem Durchmesser des Bereichs 2B ist.

Wie aus Figur 8 zu ersehen ist, ragen durch diesen Anfangsbereich 2D die Federstege 18 im eingebauten Zustand der Haltefeder 5 soweit vor, daß man diese leicht mit einem Werkzeug fassen und zum Lösen der Steckverbindung zusammendrücken kann, bis die Federlappen 13 und die Stützlappen 19 durch den Anfangsbereich 2D hindurchgehen.

## Patentansprüche

1. **Lösbare Steckverbindung** für Hochdruckleitungen, insbesondere für Bremsleitungen im Kraftfahrzeugbau, bestehend aus einem zylindrischen Aufnahmeteil ( 1 ) mit einem zentralen Aufnahmeraum ( 2 ) und einem rohrförmigen Einsteckteil ( 3 ) zum Einführen in den Aufnahmeraum (2) sowie einer separaten Haltefeder (5) aus Federblech mit konisch zusammenlaufenden Federlappen ( 13 ), deren achsnahe Enden sich am Einsteckteil ( 3 ) abstützen und deren schräg nach außen abstehende Enden in eine umlaufende Nische ( 22 ) des Aufnahmeraums ( 2 ) federnd eingreifen und sich an einer radialen Abschlußwand ( 23 ) der Nische ( 22 ) entgegen der Eindrückrichtung abstützen, wobei das Einsteckteil ( 3 ) eine zur Aufnahme und axialen Festlegung des Rohrendes ( 8) entsprechende Bohrung ( 11 ) aufweist, **dadurch gekennzeichnet, daß** das Einsteckteil ( 3 ) an der Einführseite einen ringförmigen Halteflansch ( 4 ) aufweist und mit einer umlaufenden, im Querschnitt trapezförmigen Aussparung ( 12 ) versehen ist, in welche das Rohrende ( 8 ) durch verformende Aufweitung der Rohrwand eindrückbar ist, und daß die Haltefeder ( 5 ) mit einem zentralen Schellenbügel ( 14 ) versehen ist, welcher auf das rohrförmige Einsteckteil ( 8) unmittelbar neben dem Halteflansch ( 4 ) aufsteckbar ist.

2. **Lösbare Steckverbindung** nach Anspruch 1, **dadurch gekennzeichnet, daß** die Federlappen ( 13 ) an der in Eindrückrichtung vorderen Stirnseite des Schellenbügels ( 14) mit einem Rundbogen ( 15 ) angeformt sind und an ihren schräg nach außen abstehenden Enden über einen kurzen Bogen ( 16 ) mit einem radialen Steg ( 17 ) nach innen geführt und im Abstand der achsnahen Enden von der Schellenbügelachse mit einem etwa parallel zur Achse des Schellenbügels ( 14 ) weggerichteten Federsteg ( 18 ) versehen sind.

3. **Lösbare Steckverbindung** nach Anspruch 1 oder 2, **dadurch gekennzeichnet, daß** jeder Federlappen ( 13 ) an seinen beiden Längsseiten angeformte Stützlappen ( 19 ) mit unteren Stützkanten ( 20 ) und oberen Stützkanten ( 21 ) aufweist, die die Rundbögen ( 15) und ( 16) der Federlappen ( 13) an beiden Enden geringfügig überragen.

4. **Lösbare Steckverbindung** nach Anspruch 3, **dadurch gekennzeichnet, daß** die zusätzlichen Stützlappen ( 19) von den Federlappen ( 13) aus leicht nach innen gebogen sind, so daß diese auf einem Kreisbogen konzentrisch zum Schellenbügel ( 14 ) verlaufen.

## Claims

1. A releasable plug connection for high-pressure lines, in particular for brake lines in automobile engineering, comprising a cylindrical receiving portion (1) having a central receiving space (2) and a tubular plug-in member (3) for introduction into the receiving space (2) and a separate holding spring (5) of spring plate with conically converging spring tabs (13)':whose ends which are near the axis are supported on the plug-in member (3) and whose inclinedly outwardly projecting ends resiliently engage into a peripherally extending recess (22) in the receiving space (2) and are supported against a radial end wall (23) of the recess (22) in opposite relationship to the push-in direction, wherein the plug-in member (3) has a bore (11) suitable for receiving and axially fixing the pipe end (8), **characterised in that** the plug-in member (3) at the introduction end has an annular holding flange (4) and is provided with a peripherally extending groove (12) which is of trapezoidal cross-section and into which the pipe end (8) can be pressed by deforming expansion of the pipe wall, and that the holding spring (5) is provided with a central clip hoop (14) which can be fitted on to the tubular plug-in member (3) immediately beside the holding flange (4).

2. A releasable plug connection according to claim 1 **characterised in that** the spring tabs (13) are formed with a round bend portion (15) on the end of the clip hoop (14), which is the front end in the push-in direction, and at their indinedly outwardly projecting ends the spring tabs are guided inwardly by way of a short bend portion (16) with a radial limb (17) and are provided at the spacing of the ends which are near the axis from the axis of the clip hoop with a spring limb (18) which is directed away substantially parallel to the axis of the clip hoop (14).

3. A releasable plug connection according to claim 1 or claim 2 **characterised in that** each spring tab (13) has support tabs (19) which are formed on the two longitudinal sides thereof and which have lower support edges (20) and upper support edges (21) which project slightly at both ends beyond the round bend portions (15) and (16) of the spring tabs (13).

4. A releasable plug connection according fo claim 3 **characterised in that** the additional support tabs (19) are bent slightly inwardly from the spring tabs (13) so that they extend on a circular arc in concentric relationship with the clip hoop (14).

## Revendications

1. Raccord rapide amovible pour canalisations à haute pression, notamment pour des conduites de circuit de freinage dans la construction automobile, se composant d'un élément récepteur femelle cylindrique (1) définissant un logement d'emmanchement central (2) et d'un élément tubulaire embrochable mâle (3) destiné à être introduit dans le logement d'emmanchement (2), ainsi que d'un ressort de retenue séparé (5) en tôle d'acier à ressort comprenant des pattes élastiques (13) se rapprochant suivant un tracé conique, dont les extrémités voisine de l'axe prennent appui sur l'élément mâle (3) et dont les extrémités faisant obliquement saillie vers l'extérieur viennent s'encastrer, par cédage élastique, dans une alvéole périphérique (22) du logement d'emmanchement (2) et prendre appui contre une paroi terminale radiale (23) de l'alvéole (22) dans le sens contraire à celui de l'emmanchement par pression, l'élément mâle (3) comportant en l'occurrence un alésage correspondant (11) destiné à recevoir et à immobilier en position dans le plan axial l'extrémité du tube (8), **caractérisé en ce que** l'élément embrochable mâle (3) comporte, au niveau de sa partie d'introduction, une bride de retenue annulaire (4) et qu'elle présente un évidemment périphérique (12) de section trapézoïdale dans lequel l'extrémité du tube (8) est destinée à être insérée par pression en forçant la paroi tubulaire à s'écarter par déformation et **en ce que** le ressort de retenue (5) est muni d'un collier de serrage à disposition centrale (14) qui est destiné à venir s'emmancher sur l'élément tubulaire embrochable mâle (3) juste à côté de la bride de retenue (4).

2. Raccord rapide amovible selon la revendication 1, **caractérisé en ce que** les pattes élastiques (13) sont réalisées solidaires par formage, au niveau de la face avant, dans le sens de son introduction sous pression, du collier de serrage (14), d'une portion cintrée en demi-cercle (15) et **en ce qu'**au niveau de leurs extrémités faisant obliquement saillie vers l'extérieur elles sont orientées vers l'intérieur, en passant par une partie cintrée de longueur réduite (16), dans la proportion d'une barrette radiale (17) et sont munies, avec un certain dégagement par rapport aux extrémités pratiquement axiales de l'axe du collier de serrage, d'une languette élastique (18) orientée vers l'extérieur, suivant une disposition sensiblement parallèle à l'axe du collier de serrage (14).

3. Raccord rapide amovible selon la revendication 1 ou 2, **caractérisé en ce que** chaque patte élastique (13) comporte, solidaires par formage de ses deux côtés longitudinaux, des pattes d'appui (19) définissant des arêtes d'appui inférieures (20) et des arêtes d'appui supérieures (21) qui, au niveau des deux extrémités, dépassent très légèrement les portions cintrées en demi-cercle (15) et (16) des pattes élastiques (13).

4. Raccord rapide amovible selon la revendication 3, **caractérisé en ce que** les pattes d'appui supplémentaires (19), partant des pattes élastiques (13), sont légèrement repliées en arc de cercle vers l'intérieur, ce qui fait qu'elles sont, sur un arc de cercle, agencées selon une disposition concentrique au collier de serrage (14).
